# EUROPEAN PATENT APPLICATION

(11) **EP 4 618 562 A1**
(43) Date of publication of application: **17.09.2025**
(21) Application number: 22966576.5
(22) Date of filing: 25.11.2022
(51) Int. Cl.: H04N 21/442, H04N 21/422, H04N 21/4223, H04N 21/485, H04N 21/488

(54) **TRANSPARENT DISPLAY DEVICE AND OPERATING METHOD THEREOF**

(71) Applicant: LG Electronics Inc., Yeongdeungpo-gu Seoul 07336 (KR)
(72) Inventor: SEOL, Seongwoon, Seoul 06772 (KR); AN, Obong, Seoul 06772 (KR)
(74) Representative: Schornack, Oliver
(86) International application number: PCT/KR2022/018906
(87) International publication number: WO 2024/111716

(57) **Abstract**

In the present disclosure, a text display direction of a transparent display device may be automatically rotated in accordance with a position of a viewer. A transparent display device according to an embodiment of the present disclosure may comprise: a transparent display on which image content and first text content are displayed; and a controller which recognizes a position of a viewer viewing the image content and, if the viewer is positioned behind the transparent display, displays second text content on the transparent display, the second text content being obtained by rotating the first text content in left and right directions.

## Description

### [Technical Field]

The present disclosure relates to a transparent display device.

### [Background Art]

Information displays are evolving into new forms as technology advances. Among them, transparent display devices have the unique advantage of being able to display information as a background.

Transparent display devices display information on a transparent screen by utilizing the property of transmitting light.

As transparent display devices become more popular, they are expected to provide users with new interfaces when combined with content such as augmented reality.

Previous Korean Patent Publication No. 10-2014-0104220 discloses a method for switching screens in an electronic device using a transparent display.

However, the existing patents had a problem in that they only flipped the screen in the left and right direction or in the vertical direction according to the direction in which the device was placed, and did not reflect the user's position.

Accordingly, additional user input was required to switch the screen of the transparent display, which caused inconvenience in usability.

In particular, if the direction of text displayed on a transparent display does not change according to the user's position, there is a problem that the readability of the text viewed by the user is significantly reduced.

### [Disclosure]

### [Technical Problem]

An object of the present disclosure is to provide a transparent display device capable of rotating the direction of text content according to a user's position without separate user input.

An object of the present disclosure is to provide a transparent display device capable of recognizing a user's position and providing text content corresponding to the recognized user's gaze direction.

### [Technical Solution]

A transparent display device according to an embodiment of the present disclosure may include a transparent display displaying image content and first text content; and a controller recognizing a position of a viewer viewing the video content and, if the viewer is positioned behind the transparent display, displays second text content obtaining by rotating the first text content in a left and right direction on the transparent display.

A method for operating a transparent display device according to an embodiment of the present disclosure may include displaying image content and first text content on a transparent display; recognizing a position of a viewer viewing the image content; and displaying second text content obtaining by rotating the first text content in the left and right direction if the viewer is positioned behind the transparent display.

### [Advantageous Effect]

According to various embodiments of the present disclosure, regardless of the viewer's position in front or behind a transparent display device, text can be provided in a display direction appropriate to the position, thereby improving the viewer's readability.

According to an embodiment of the present disclosure, even when viewers are positioned at the front and rear of a transparent display device, text can be displayed in an appropriate direction, thereby improving readability for viewers.

According to an embodiment of the present disclosure, the visibility and readability of an OSD image can be improved by changing the position and color of the OSD image according to the texture of the content image.

According to an embodiment of the present disclosure, even if viewers are positioned in front and behind a transparent display, split images appropriate for their positions can be provided, thereby improving user experience.

### [Description of Drawings]

Fig. 1 is a block diagram illustrating a configuration of a display device according to an embodiment of the present disclosure.
Fig. 2 is a block diagram illustrating a remote control device according to an embodiment of the present disclosure
Fig. 3 is a view illustrating an actual configuration of a remote control device according to an embodiment of the present disclosure.
Fig. 4 is a view illustrating an example of utilizing a remote control device according to an embodiment of the present disclosure.
Fig. 5 is a view illustrating the configuration of a transparent display device according to an embodiment of the present disclosure.
Figs. 6a to 6d are views explaining various types of transparent display devices.
Fig. 7 is a view explaining a side structure of a transparent type display device of the present disclosure.
Fig. 8 is a flowchart for explaining a method for operating a transparent display device according to an embodiment of the present disclosure.
Figs. 9 and 10 are views for explaining a method for recognizing a viewer's position using a remote control device according to an embodiment of the present disclosure.
Fig. 11 is a view explaining a process of recognizing the position of a viewer through an **IR** sensor according to an embodiment of the present disclosure.
Figs. 12a and 12b are views explaining a method for recognizing the position of a viewer using sound output through a speaker according to an embodiment of the present disclosure.
Fig. 13 is a flowchart illustrating a method for recognizing a viewer's position based on a direction of reception of a voice spoken by the viewer according to an embodiment of the present disclosure.
Fig. 14 is a flowchart illustrating a method for recognizing a viewer's position by recognizing a viewer's face according to an embodiment of the present disclosure.
Figs. 15a to 15c are views explaining examples of switching the display direction of text content according to the viewer's position.
Figs. 16a and 16b are views explaining examples of providing different display directions of images according to execution of a multi-view function when there are viewers respectively in front and behind a transparent display according to an embodiment of the present disclosure.

### [Best Model

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure is an intelligent display device that adds a computer-assisted function to, for example, a broadcast reception function, and while remaining faithful to the broadcast reception function, adds an Internet function or the like and may have a more convenient interface such as a manual input device, a touch screen, or a space remote control. In addition, with the support of wired or wireless Internet functions, it is possible to connect to the Internet and a computer, and perform functions such as email, web browsing, banking, or games. A standardized general-purpose OS may be used for these various functions.

Accordingly, the display device described in the present disclosure may perform various user-friendly functions, for example, since various applications may be freely added or deleted on a general-purpose OS kernel. More specifically, the display device may be, for example, a network TV, an HBBTV, a smart TV, an LED TV, an OLED TV, or the like and in some cases, may also be applied to a smartphone.

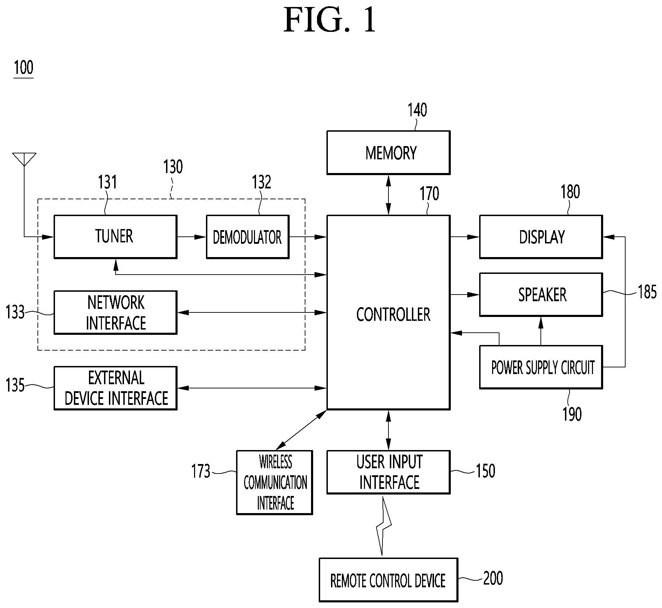

Fig. 1 is a block diagram illustrating a configuration of a display device according to an embodiment of the present disclosure.

Referring to Fig. 1, a display device 100 may include a broadcast reception part 130, an external device interface 135, a memory 140, a user input interface 150, a controller 170, a wireless communication interface 173, a display 180, a speaker 185, and a power supply circuit 190.

The broadcast reception part 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into image signals, audio signals, and broadcast program-related data signals, and may restore the divided image signals, audio signals, and data signals into an output available form.

The external device interface 135 may receive an application or an application list in an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wiredly connected to the display device 100 and deliver the received image or the audio to the controller. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be outputted through the speaker 185.

An external device connectable to the external device interface 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. In other words, the network interface 133 may transmit or receive data to or from a corresponding server by accessing a predetermined webpage through the network.

The network interface 133 may receive content or data provided from a content provider or a network operator. In other words, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through network.

The memory 140 may store signal-processed image, voice, or data signals stored by a program in order for each signal processing and control in the controller 170.

In addition, the memory 140 may perform a function for temporarily storing image, voice, or data signals output from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote control device 200 or transmit control signals from the controller 170 to the remote control device 200 according to various communication methods such as Bluetooth, Ultra Wideband (WB), ZigBee, Radio Frequency (RF), and **IR** communication methods.

In addition, the user input interface 150 may transmit, to the controller 170, control signals input from local keys (not illustrated) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication interface 173 may perform wired or wireless communication with an external device. The wireless communication interface 173 may perform short-range communication with an external device. For this, the wireless communication interface 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication interface 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication interface 173 may detect (or recognize) a wearable device capable of communication around the display device 100.

Furthermore, if the detected wearable device is a device authenticated to communicate with the display device 100, the controller 170 may transmit at least part of data processed in the display device 100 to the wearable device through the wireless communication interface 173. Therefore, a user of the wearable device may use the data processed by the display device 100 through the wearable device.

The display 180 may convert image signals, data signals, or on-screen display (OSD) signals, which are processed in the controller 170, or images signals or data signals, which are received in the external device interface 135, into R, G, and B signals to generate driving signals.

Furthermore, the display device 100 illustrated in Fig. 1 is just one embodiment of the present disclosure and thus, some of the components illustrated may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display 180 and the speaker 185.

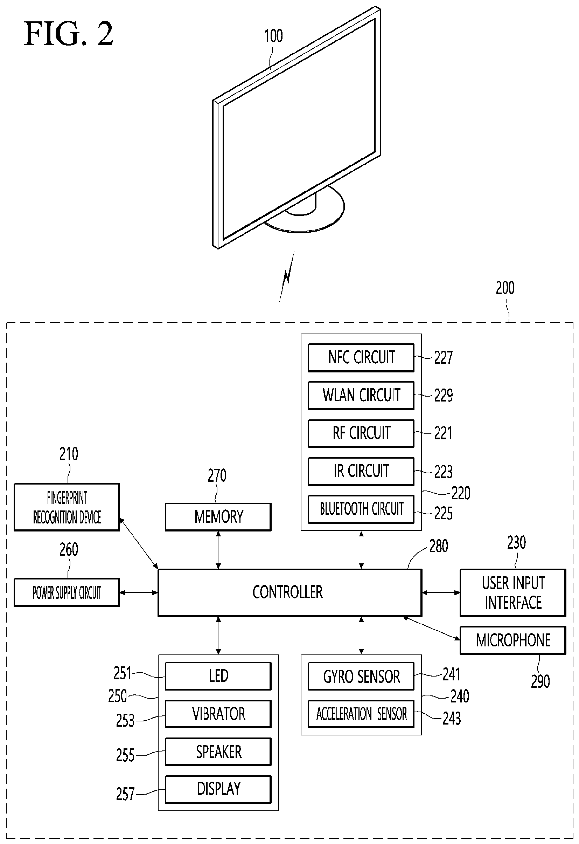

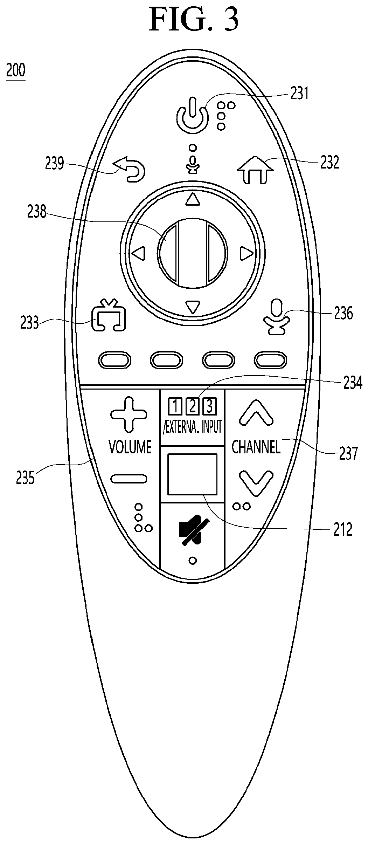

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition device 210, a wireless communication interface 220, a user input interface 230, a sensor 240, an output interface 250, a power supply circuit 260, a memory 270, a controller 280, and a microphone 290.

Referring to Fig. 2, the wireless communication interface 220 transmits/receives signals to/from an arbitrary any one of display devices according to the above-mentioned embodiments of the present disclosure.

The remote control device 200 may include a radio frequency (RF) circuit 221 capable of transmitting or receiving signals to or from the display device 100 according to an RF communication standard, and an IR circuit 223 capable of transmitting or receiving signals to or from the display device 100 according to an IR communication standard. In addition, the remote control device 200 may include a Bluetooth circuit 225 capable of transmitting or receiving signals to or from the display device 100 according to a Bluetooth communication standard. In addition, the remote control device 200 may include an NFC circuit 227 capable of transmitting or receiving signals to or from the display device 100 according to an NFC communication standard, and a wireless LAN (WLAN) circuit 229 capable of transmitting or receiving signals to or from the display device 100 according to a WLAN communication standard.

In addition, the remote control device 200 may transmit signals containing information on the movement of the remote control device 200 to the display device 100 through the wireless communication interface 220.

Moreover, the remote control device 200 may receive signals transmitted from the display device 100 through the RF circuit 221 and if necessary, may transmit a command for power on/off, channel change, and volume change to the display device 100 through the IR circuit 223.

The user input interface 230 may be configured with a keypad, a button, a touch pad, or a touch screen. A user may operate the user input interface 230 to input a command relating to the display device 100 to the remote control device 200. If the user input interface 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

Fig. 2 is described again.

If the user input interface 230 includes a touch screen, a user may touch a soft key of the touch screen to input a command relating to the display device 100 to the remote control device 200. In addition, the user input interface 230 may include various kinds of input interfaces operable by a user, for example, a scroll key and a jog key, and this embodiment does not limit the scope of the present disclosure.

The sensor 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display 180 of the display device 100.

The output interface 250 may output image or voice signals in response to the operation of the user input interface 230, or may output image or voice signals corresponding to signals transmitted from the display device 100.

A user may recognize whether the user input interface 230 is operated or the display device 100 is controlled through the output interface 250.

For example, the output interface 250 may include an LED 251 for flashing, a vibrator 253 for generating vibration, a speaker 255 for outputting sound, or a display 257 for outputting an image, if the user input interface 230 is manipulated or signals are transmitted/received to/from the display device 100 through the wireless communication interface 220.

Additionally, the power supply circuit 260 supplies power to the remote control device 200 and if the remote control device 200 does not move for a predetermined time, stops the power supply, so that power waste may be reduced.

The power supply circuit 260 may resume the supply of power if a predetermined key provided at the remote control device 200 is operated.

The memory 270 may store various kinds of programs and application data required to control or operate the remote control device 200.

If the remote control device 200 transmits/receives signals wirelessly through the display device 100 and the RF circuit 221, the remote control device 200 and the display device 100 transmits/receives signals through a predetermined frequency band.

The controller 280 of the remote control device 200 may store, in the memory 270, information on a frequency band for transmitting/receiving signals to/from the display device 100 paired with the remote control device 200 and refer to it.

The controller 280 controls general matters relating to the control of the remote control device 200. The controller 280 may transmit a signal corresponding to a predetermined key operation of the user input interface 230 or a signal corresponding to the movement of the remote control device 200 sensed by the sensor 240 to the display device 100 through the wireless communication interface 220.

In addition, the microphone 290 of the remote control device 200 may acquire voice.

A plurality of microphones 290 may be provided.

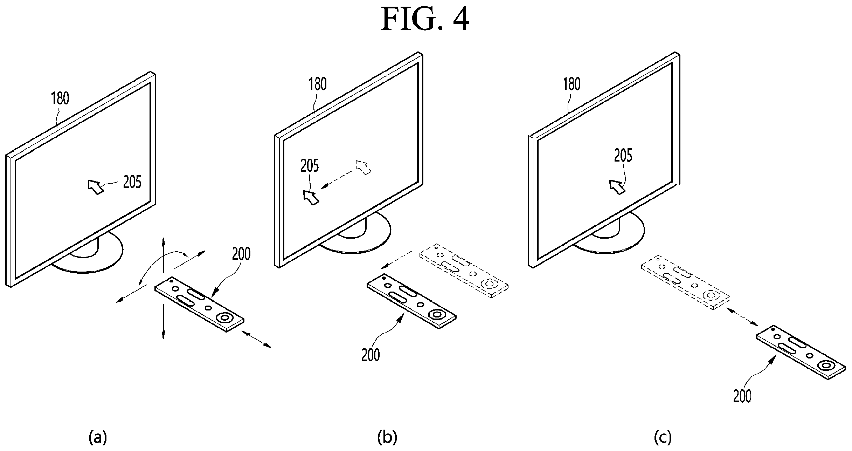

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display 180.

A user may move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display 180. Thus, a selected region in the display 180 corresponding to the pointer 205 may be zoomed in and displayed in an enlarged size.

On the other hand, if a user moves the remote control device 200 close to the display 180, a selection area in the display 180 corresponding to the pointer 205 may be zoomed out and displayed in a reduced size.

On the other hand, if the remote control device 200 is moved away from the display 180, a selection area may be zoomed out and if the remote control device 200 is moved closer to the display 180, a selection area may be zoomed in.

Additionally, if a specific button in the remote control device 200 is pressed, recognition of a vertical or horizontal movement may be excluded. In other words, if the remote control device 200 is moved away from or closer to the display 180, the up, down, left, or right movement maynot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display 180 and also may be displayed in correspondence to a plurality of points such as a line and a surface.

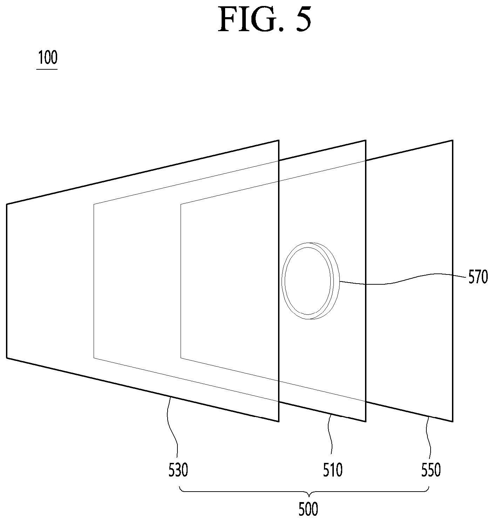

Fig. 5 is a view illustrating the configuration of a transparent display device according to an embodiment of the present disclosure.

Referring to Fig. 5, a transparent display device 100 may include a transparent display 500 and a main body 570.

The main body 570 may include a broadcast receiving part 130, an external device interface 135, a memory 140, a user input interface 150, a controller 170, a wireless communication interface 173, a speaker 185, and a power supply circuit 190 described in Fig. 1.

The transparent display 500 can perform all the functions performed by the display 180 described in Fig. 1.

A transparent display 500 may include a transparent display panel 510, a reinforced glass cover 530, and a transparent back cover 550.

The transparent display panel 510 may be either a projection display type or a transmissive display type.

Projection display type may be a type that uses technology to display images by projecting light onto a transparent screen.

A transmissive display type may be a type that uses technology to change the transmittance of the material itself, such as OLED, which emits light.

The transparent display panel 510 may include an OLED panel in which each pixel includes an organic light-emitting diode (OLED). In other words, the transparent display panel 510 may have a transmissive display type.

A tempered glass cover 530 can be attached to the front of the transparent display panel 510 to protect the transparent display panel 510.

The tempered glass cover 530 may be made of transparent glass to protect the transparent display panel 510 from external impact.

The transparent back cover 550 may be a cover attached to the rear of the transparent display panel 510.

A main body 570 may be mounted in a certain area of the transparent back cover 550. The shape of the certain area may be circular, but this is only an example, and may have a shape such as a square.

The main body 570 can be connected to a bracket for fixing the transparent display 500 to a wall.

A controller 170 provided in the main body 570 can control the transmittance of the transparent display panel 510 by applying an electric signal to the transparent display panel 510.

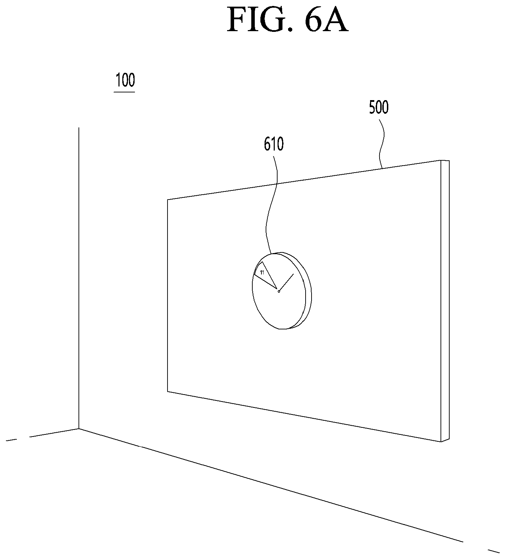

Figs. 6a to 6d are views explaining various types of transparent display devices.

Fig. 6a is an embodiment in which the main body 570 is positioned in the central area of the transparent display 500.

The transparent display 500 can display information on a first area 610 corresponding to the position of the main body 570.

On the first area 610, one or more of time information, weather information, and schedule information may be displayed. On the first area 610, information may be displayed by applying the AOD (Always On Display) function.

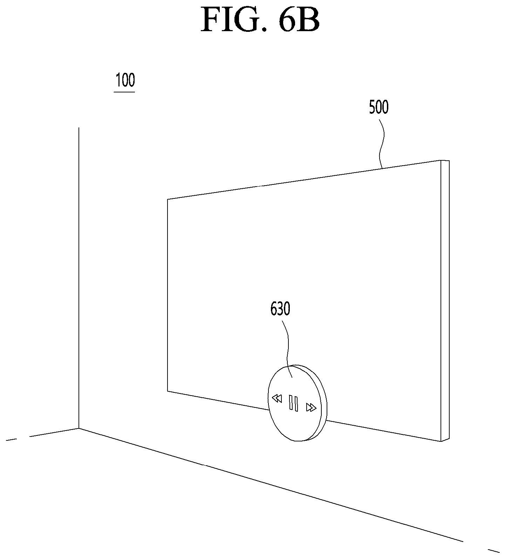

Fig. 6b is an embodiment in which the main body 570 is positioned in the lower end area of the transparent display 500.

A part of the main body 570 may be exposed at the lower end of the transparent display 500.

The transparent display 500 can display music playback information on a second area 630 corresponding to the position of the main body 570. The main body 570 can be equipped with a speaker, and the speaker can play music.

The user can view information about the music being played through the second area 630. In addition, the user can control the playback of the music through the music playback information displayed on the second area 630 through the remote control device 200.

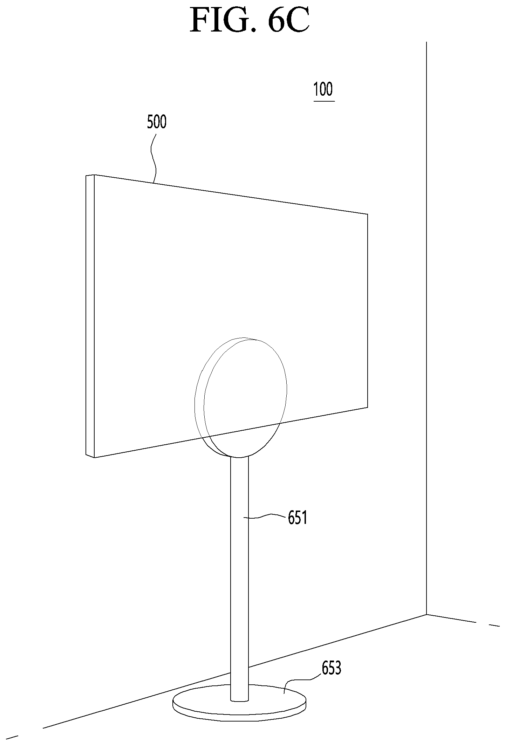

Fig. 6c is an embodiment explaining a structure in which a main body 570 is connected to a stand 651.

In Fig. 6c, the main body 570 is not fixed to the wall, but can be fixed by being connected to a stand 651. The stand 651 can be connected to a base 653 that serves as a support for the floor.

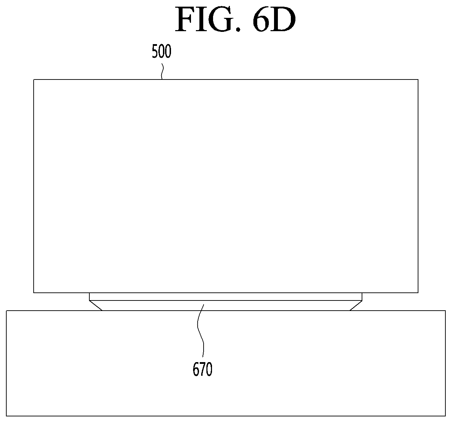

Figure 6d illustrates a transparent display 500 placed on top of a living room shelf. The transparent display 500 can be positioned on the upper surface of the living room shelf via a support 670.

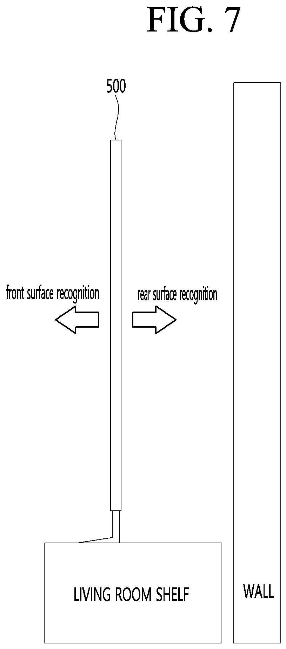

Fig. 7 is a view explaining a side structure of a transparent type display device of the present disclosure.

In Fig. 7, it is assumed that the display device 100 is placed on the upper surface of the living room as described in Fig. 6d.

A camera (not illustrated) is placed on the transparent display 500 to recognize objects positioned in the front or rear. To this end, the camera may be provided with a front camera that detects objects in the front and a rear camera that detects objects in the rear.

An object can be either a user or an object (including a wall).

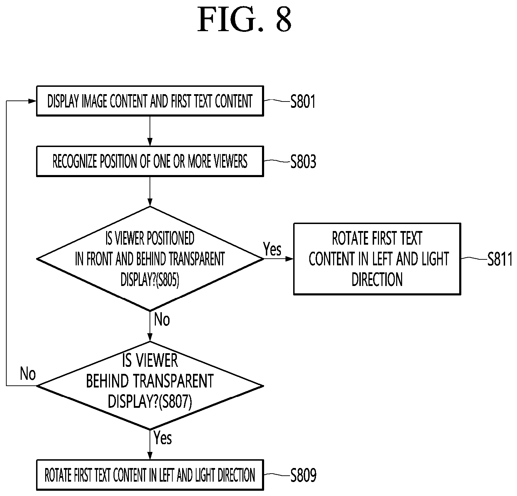

Fig. 8 is a flowchart for explaining a method for operating a transparent display device according to an embodiment of the present disclosure.

Hereinafter, the display device 100 of Fig. 1 is referred to as a transparent display device.

Additionally, the display 180 of Fig. 1 is named a transparent display.

**The controller 170 of the transparent display device 100 displays image content and text content on the transparent display 180 (S801).**

In one embodiment, the text content may be either a subtitle synchronized with the image content or an On Screen Display (OSD) image.

Text content can be content that contains text.

Video content and text content can be displayed on different display layers.

The transparent display 180 may be composed of multiple display layers. Each display layer may display a different type of image. For example, the first display layer may be a layer that displays image content input from the outside, and the second display layer may be a layer that displays an OSD image or subtitle.

Text content may be content whose position or display direction can be changed.

**The controller 170 recognizes the position of one or more viewers (S803).**

In one embodiment, the controller 170 can determine whether the viewer is positioned in front of the transparent display 180 or behind the transparent display 180.

In another embodiment, the controller 170 can determine whether each of the plurality of viewers is positioned in front and behind the transparent display 180.

The controller 170 can recognize the viewer's position in various ways. A method for recognizing the viewer's position will be described later.

**The controller 170 determines whether the viewer is positioned in front or behind the transparent display 180 based on the recognized viewer's position (S805).**

The controller 170 can determine whether the viewers are positioned in front and behind the transparent display 180 based on the recognized positions of each of the multiple viewers.

**If the controller 170 determines that the viewer is not positioned in front or behiend the transparent display 180, it determines whether the viewer is positioned behind the transparent display 180 (S807).**

**The controller 170 rotates the first text content in the left and right direction when the viewer is positioned behind the transparent display 180 (S809).**

The controller 170 can display by rotating (pivoting) the display direction of the first text content in the left and right direction when the viewer is positioned only at the rear of the transparent display 180.

In other words, the controller 170 can display only the second text content which is obtained by rotating the first text content in the left and right direction.

This is to improve the readability of text content displayed on a transparent display 180.

Meanwhile, the controller 170 further displays second text content, which is obtained by piovoting the first text content in the left and right direction, on the transparent display 180 when the viewer is positioned in front and behind the transparent display 180 (S805) **(S811).**

The controller 170 can display second text content including the same text as the first text content on the transparent display 180 to improve readability of text for viewers positioned at the rear when each of the plurality of viewers is positioned at the front and rear of the transparent display 180.

The controller 170 can display second text content, which is obtained by rotating the display direction of the first text content in the left and right direction, together with the first text content.

Accordingly, a first viewer positioned in front of the transparent display 180 can normally view the first text content, and a second viewer positioned in the back of the transparent display 180 can normally view the second text content.

Below, embodiments of recognizing the viewer's position are described.

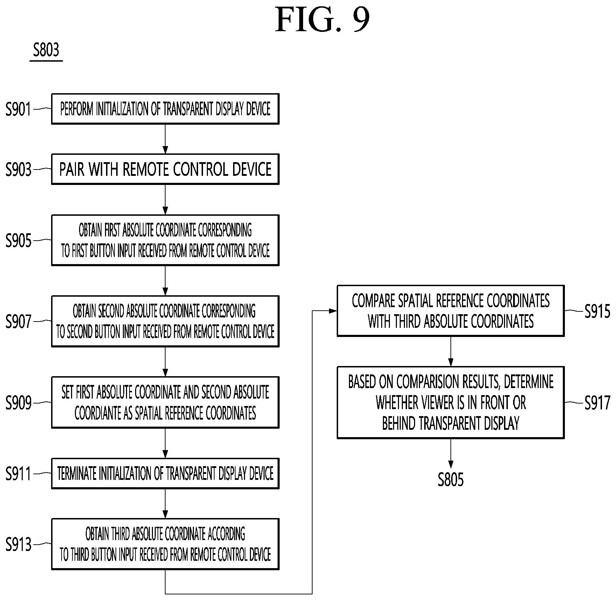

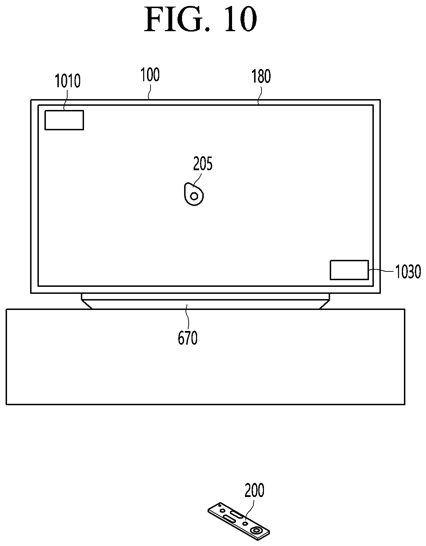

Figs. 9 and 10 are views for explaining a method for recognizing a viewer's position using a remote control device according to an embodiment of the present disclosure.

Referring to Fig. 9, the controller 170 of the transparent display device 100 performs initialization of the transparent display device 100 (S901).

In one embodiment, initialization of the transparent display device 100 may be a process of setting the setting values of the transparent display device 100 to default values.

The controller 170 can perform initialization through a signal received from a remote control device 200 or a button input provided on the transparent display device 100.

**The controller 170 pairs with the remote control device 200 via wireless communication after initializing the transparent display device 100 (S903).**

The controller 170 can perform Bluetooth pairing with the remote control device 200 after initialization.

Bluetooth pairing may be a process in which a transparent display device 100 identifies a remote control device 200 that is a connection target via Bluetooth and registers information about the identified remote control device 200.

**The controller 170 obtains a first absolute coordinate corresponding to the first button input from the remote control device 200 (S905).**

The controller 170 can display an initialization menu including guide text guiding to click the upper left button and the upper right button on the transparent display 180.

Referring to Fig. 10, the transparent display device 100 can display the upper left button 1010 and the lower right button 1030 on the transparent display 180 after initialization and Bluetooth pairing.

The first button input may be an input for selecting the upper left button 1010 via a pointer 205 controlled by the movement of the remote control device 200.

The controller 170 can calculate the first absolute coordinate according to the input of selecting the upper left button 1010. The first absolute coordinate can be a three-dimensional spatial coordinate.

The first absolute coordinate can be derived as X1, Y1, Z1.

**The controller 170 obtains a second absolute coordinate corresponding to the second button input from the remote control device 200 (S907).**

The second button input may be an input for selecting the lower right button 1030 via a pointer 205 controlled by the movement of the remote control device 200.

The controller 170 can calculate the second absolute coordinates according to the input of selecting the lower right button 1030. The second absolute coordinates can be three-dimensional spatial coordinates.

The second absolute coordinate can be derived as X2, Y2, Z2.

**The controller 170 sets the first absolute coordinates and the second absolute coordinates as spatial reference coordinates (S909).**

**After that, the controller 170 terminates the initialization of the transparent display device 100 (S911).**

**The controller 170 obtains the third absolute coordinates according to the third button input received from the remote control device 200 (S913).**

The third button input may be an input received according to the operation of the viewer's remote control device 200 after the initialization of the transparent display device 100 is completed.

**The controller 170 compares the spatial reference coordinates produced in step S909 with the third absolute coordinates (S915).**

The controller 170 can compare the first absolute coordinates, the second absolute coordinates, and the third absolute coordinates.

For example, assume that the coordinate values along the z-axis range from -500 to 500.

The controller 170 can determine that the viewer is positioned in front of the transparent display 180 when the coordinate of the z-axis of the third absolute coordinate has a value of "+" based on the first and second absolute coordinates, and can determine that the viewer is positioned in the rear of the transparent display 180 when the coordinate of the z-axis of the third absolute coordinate has a value of "-".

As another example, assume that the coordinate values along the z-axis range from 0 to 1000.

The controller 170 can determine that the viewer is positioned in front of the transparent display 180 when the coordinate of the z-axis is in the range of 0 to 500 based on the first and second absolute coordinates, and can determine that the viewer is positioned in the rear of the transparent display 180 when the coordinate of the z-axis is in the range of 501 to 1000.

**The controller 170 determines whether the viewer is in front or behind the transparent display 180 based on the comparison result (S917).**

The controller 170 can perform step S805 of Fig. 8 and subsequent steps after recognizing the viewer's position.

In this way, according to the embodiment of the present disclosure, the viewer's position can be easily recognized with just a simple operation of the viewer's remote control device 200.

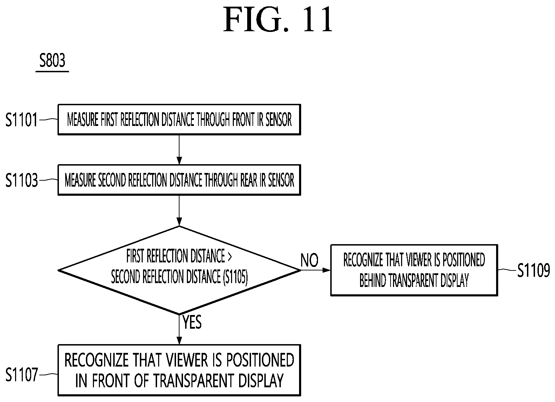

Fig. 11 is a view explaining a process of recognizing the position of a viewer through an IR sensor according to an embodiment of the present disclosure.

The transparent display device 100 may include a front IR sensor (not illustrated) attached to the front surface of the transparent display 180 and a rear IR sensor (not illustrated) attached to the rear surface of the transparent display 180.

**The controller 170 measures the first reflection distance of infrared rays reflected from an object through the front IR sensor (S1101).**

The front IR sensor can transmit an infrared transmission signal (first IR signal) to an object and receive an infrared reception signal (first reflected signal) reflected from the object.

The controller 170 can calculate the time difference between the time at which an infrared transmission signal is transmitted and the time at which an infrared reception signal is received.

The controller 170 can measure the reflection distance by dividing the speed of an infrared signal known in advance by the time difference.

**The controller 170 measures the second reflection distance of infrared rays reflected from an object through the rear IR sensor (S1103).**

The rear IR sensor can transmit an infrared transmission signal (second IR signal) to an object and receive an infrared reception signal (second reflected signal) reflected from the object.

**The controller 170 determines whether the first reflection distance is greater than the second reflection distance (S1105).**

**The controller 170 recognizes that the viewer is positioned in front of the transparent display 180 when the first reflection distance is greater than the second reflection distance (S1107).**

This is because, generally, when considering the placement of a transparent display device 100, the side with a shorter reflection distance is more likely to be closer to the wall.

**The controller 170 recognizes that the viewer is positioned behind the transparent display 180 when the second reflection distance is smaller than the first reflection distance (S1109).**

In this way, according to an embodiment of the present disclosure, the position of a viewer can be easily recognized using IR sensors.

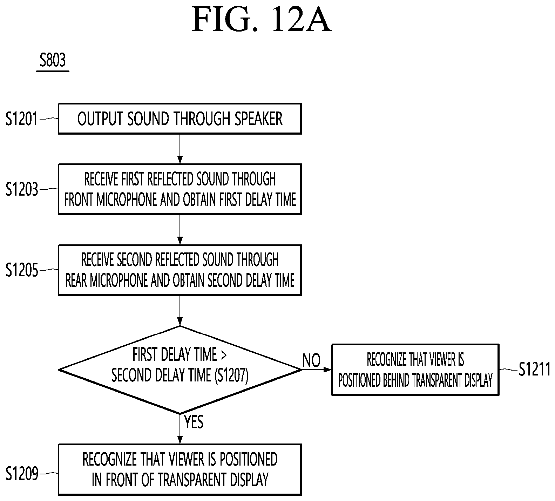

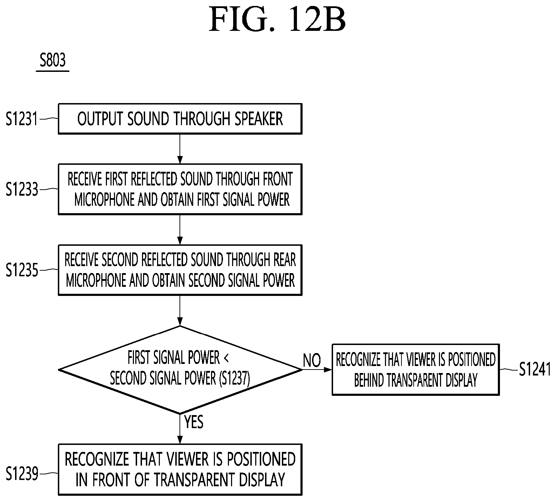

Figs. 12a and 12b are views explaining a method for recognizing the position of a viewer using sound output through a speaker according to an embodiment of the present disclosure.

In Figs. 12a and 12b, it is assumed that the user input interface 150 of the transparent display device 100 includes a front microphone (not illustrated) positioned in front of the transparent display 180 and a rear microphone positioned in the rear of the transparent display 180.

First, Fig. 12a is described.

**The controller 170 outputs sound through the speaker 185 (S1201).**

The sound output through the speaker 185 may be a test sound.

**The controller 170 receives a first reflected sound reflected from a sound output through a front microphone, and obtains a first delay time based on the time at which the first reflected sound is received (S1203).**

The controller 170 can obtain the difference between the time when sound is output through the speaker 185 and the time when the front microphone receives the first echo sound as the first delay time.

**The controller 170 receives a second reflected sound reflected from the sound output through the rear microphone, and obtains a second delay time based on the time at which the second reflected sound is received (S1205).**

The controller 170 can obtain the difference between the time when sound is output through the speaker 185 and the time when the rear microphone receives the second echo sound as the second delay time.

**The controller 170 determines whether the first delay time is greater than the second delay time (S1207).**

**The controller 170 recognizes that the viewer is positioned in front of the transparent display 180 when the first delay time is greater than the second delay time (S1209).**

The closer the transparent display device 100 is to the wall, the sooner the microphone can receive the reflected sound. In other words, the closer the transparent display device 100 is to the wall, the shorter the delay time can be.

Accordingly, if the first delay time is greater than the second delay time, the controller 170 can determine that there is a wall behind the transparent display 180 and determine that the viewer is positioned in front of the transparent display 180.

**The controller 170 recognizes that the viewer is positioned behind the transparent display 180 when the first delay time is shorter than the second delay time (S1211).**

The controller 170 can determine that there is a wall in front of the transparent display 180 and that the viewer is positioned behind the transparent display 180 if the first delay time is shorter than the second delay time.

Next, Fig. 12b is described.

**The controller 170 outputs sound through the speaker 185 (S1231).**

The sound output through the speaker 185 may be a test sound.

**The controller 170 receives a first reflected sound reflected from a sound output through a front microphone and obtains a first signal power of the first reflected sound (S1233).**

**The controller 170 receives a second reflected sound reflected from the sound output through the rear microphone and obtains the second signal power of the second reflected sound (S1235).**

**The controller 170 determines whether the first signal power is less than the second signal power (S1237).**

**The controller 170 recognizes that the viewer is positioned in front of the transparent display 180 when the first signal power is lower than the second signal power (S1239).**

The closer the transparent display device 100 is to the wall, the greater the signal power of the reflected sound received by the microphone can be. This is because the power loss of the reflected sound is smaller.

Accordingly, if the first signal power is lower than the second signal power, the controller 170 can determine that there is a wall behind the transparent display 180 and determine that the viewer is positioned in front of the transparent display 180.

**The controller 170 recognizes that the viewer is positioned behind the transparent display 180 when the first signal power is greater than the second signal power (S1241).**

The controller 170 can determine that there is a wall in front of the transparent display 180 and that the viewer is positioned behind the transparent display 180 when the first signal power is greater than the second delay time.

In this way, according to an embodiment of the present disclosure, the position of a viewer can be recognized by using microphones that receive reflected sounds for test sounds.

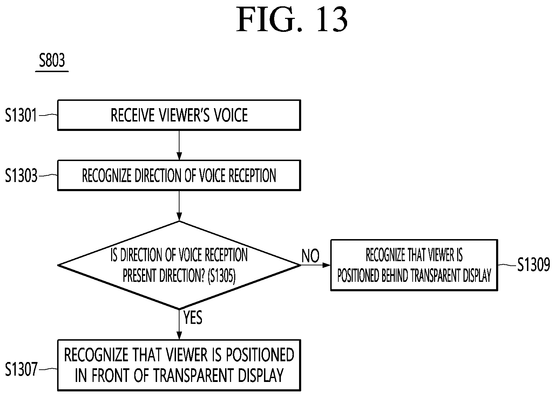

Fig. 13 is a flowchart illustrating a method for recognizing a viewer's position based on a direction of reception of a voice spoken by the viewer according to an embodiment of the present disclosure.

Referring to Fig. 13, the controller 170 receives the viewer's voice through a microphone array (S1301).

A microphone array may include a plurality of microphones. For example, a microphone array may include three microphones.

The microphone array can be placed on the front surface or rear surface of the transparent display 180.

**The controller 170 recognizes the direction of voice reception based on the received viewer's voice (S1303).**

The controller 170 can extract a vector from a voice signal received by the microphone array.

Specifically, the controller 170 can extract a vector from a voice signal received by each of a plurality of microphones included in the microphone array, and recognize the direction of voice reception based on the extracted vectors.

**The controller 170 determines whether the direction of voice reception is a preset direction (S1305).**

The controller 170 can add up the extracted vectors and determine whether the direction of the added vector is a preset direction. The preset direction may be a direction corresponding to the front of the transparent display 180.

**If the direction of voice reception is in a preset direction, the controller 170 recognizes that the viewer is positioned in front of the transparent display 180 (S1307), and if the direction of voice reception is not in a preset direction, the controller 170 recognizes that the viewer is positioned in the rear of the transparent display 180 (S1309).**

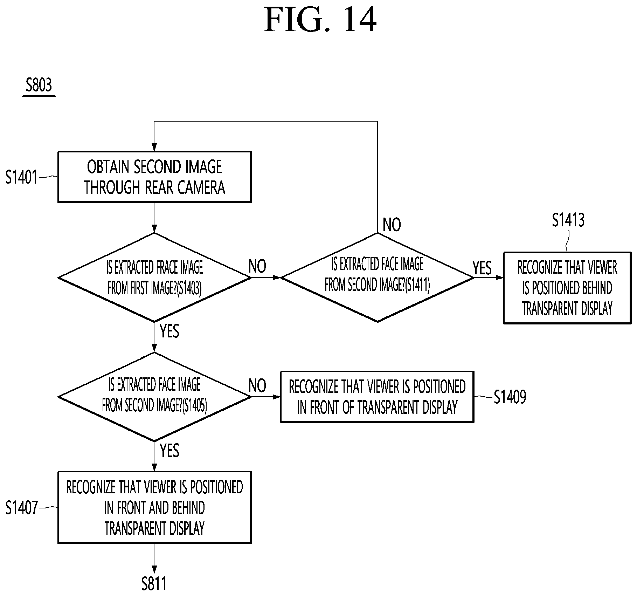

Fig. 14 is a flowchart illustrating a method for recognizing a viewer's position by recognizing a viewer's face according to an embodiment of the present disclosure.

In Fig. 14, the transparent display device 100 may include a front camera that photographs the front of the transparent display 180 and a rear camera that photographs the rear of the transparent display 180.

**The controller 170 obtains a first image photographed through a front camera and a second image photographed through a rear camera (S1401).**

**The controller 170 determines whether the viewer's face image is extracted from the first image (S1403).**

The controller 170 can determine whether a viewer's face image is extracted from the first image using a face detection algorithm.

A face detection algorithm may be an algorithm that extracts feature points included in an image, recognizes facial parts based on the extracted feature points, and detects a face based on the recognition result.

In addition, known face detection models using artificial intelligence can be used.

**The controller 170 determines whether a face image is extracted from a second image when a face image is extracted from a first image (S1405).**

**When a face image is extracted from each of the first and second images, the controller 170 recognizes that the viewers are positioned in front and behind the transparent display 180 respectively (S1407).**

The controller 170 can determine that the first viewer is positioned in front of the transparent display 180 and the second viewer is positioned behind the transparent display 180 when a face image is extracted from each of the first and second images.

After that, the controller 170 can perform step S811 of Fig. 8.

**Meanwhile, if a face image is not extracted from the first image and a face image is extracted from the second image, the controller 170 recognizes that the viewer is positioned behind the transparent display 180 (S1413).**

**Meanwhile, if a face image is extracted from the first image and a face image is not extracted from the second image, the controller 170 recognizes that the viewer is positioned behind the transparent display 180 (S1409).**

In this way, according to an embodiment of the present disclosure, the position of the viewer can be easily recognized based on images photographed through the front camera and the rear camera.

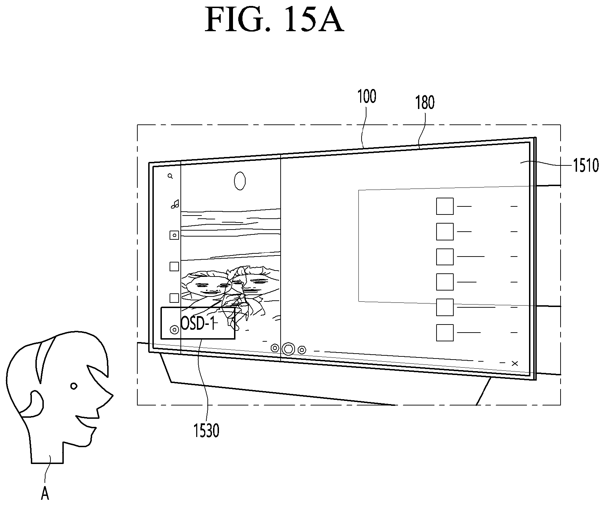

Figs. 15a to 15c are views explaining examples of switching the display direction of text content according to the viewer's position.

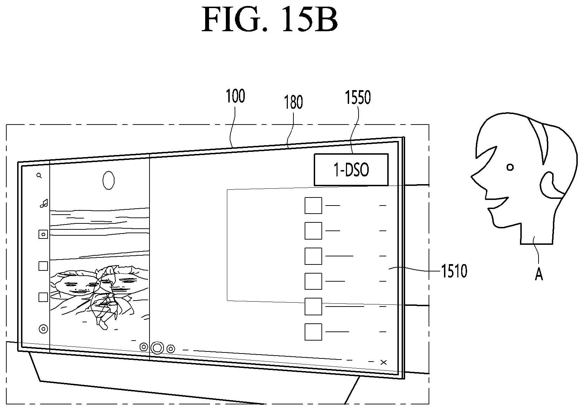

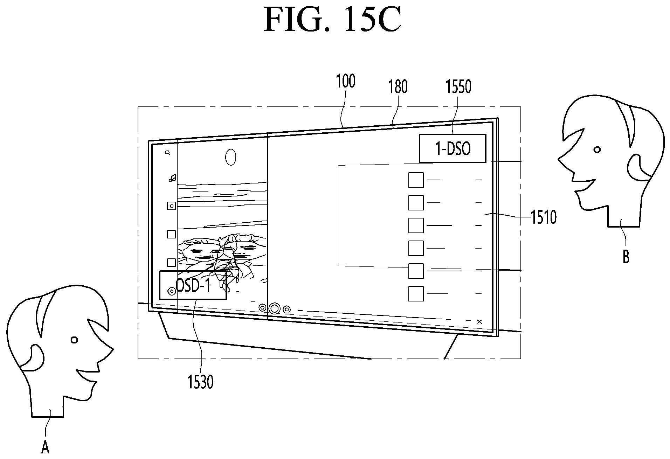

Fig. 15a is a view explaining a case where a first user A is positioned in front of a transparent display 180, Fig. 15b is a view explaining a case where a first user A is positioned in the rear of a transparent display 180, and Fig. 15c is a view explaining a case where a first user A is positioned in front of a transparent display 180 and a second user B is positioned in the rear of a transparent display 180.

Hereinafter, the text content may be, but is not limited to, an OSD image, and may also be an image containing text such as subtitles, or a pop-up window containing text indicating a notification.

Text content may be content that includes text displayed in a different layer from the image content 1510.

Referring to Fig. 15a, the transparent display 180 can display image content 1510 and first text content 1530. The first text content 1530 can be an OSD image.

The transparent display device 100 can display the first text content 1530 in an initially set direction since the first user A is positioned in front of the transparent display 180. The text included in the first text content 1530 can be arranged in text strings from left to right.

The controller 170 can reduce the transparency of the image content 1510 and the first text content 1530 so that the rear background of the transparent display 180 is not visible when the first user A is positioned in front of the transparent display 180.

Referring to Fig. 15b, the transparent display 180 can display image content 1510 and second text content 1550.

The second text content 1550 contains the same text as the first text content 1530, but the text display direction is rotated in the left and right direction.

The transparent display device 100 can rotate the first text content 1530 in the left and right direction to display the second text content 1550 when it is determined that the first user A is positioned at the rear of the transparent display 180.

At the same time, the transparent display device 100 can also change the display position of the second text content 1550 for visibility and readability.

The transparent display device 100 can display second text content 1550 obtained by rotating first text content 1530 in the first and right direction if it is determined that the first user A has moved from the front to the rear of the transparent display 180.

In this way, according to an embodiment of the present disclosure, even if the viewer's position changes, the display direction of the text can be changed accordingly, so that the viewer's readability of the text can be maintained.

Meanwhile, if the transparent display device 100 determines that the first user A has moved from the front to the rear of the transparent display 180, the transparent display device 100 can control the transparent display 180 so that the display direction of the image content 1610 is also rotated in the left and right direction.

The controller 170 can reduce the transparency of the image content 1510 and the second text content 1550 so that the front background of the transparent display 180 is not visible if the first user A is positioned behind the transparent display 180.

Fig. 15c is described.

In Fig. 15c, it is assumed that a first viewer A is positioned in the front of the transparent display 180 and a second viewer B is positioned in the rear of the transparent display 180.

The transparent display device 100 can display first text content 1530 corresponding to the position of the first viewer A in a first area of the transparent display 180, and second text content 1550 corresponding to the position of the second viewer B in a second area of the transparent display 180.

A first viewer A can view a first text content 1530 in a direction that matches the line of sight of the first viewer A, and a second viewer B can view a second text content 1550 in a direction that matches the line of sight of the second viewer B.

In this way, according to the embodiment of the present disclosure, even if viewers are positioned in front and behind the transparent display device 100, text can be displayed in an appropriate direction, thereby improving readability for viewers.

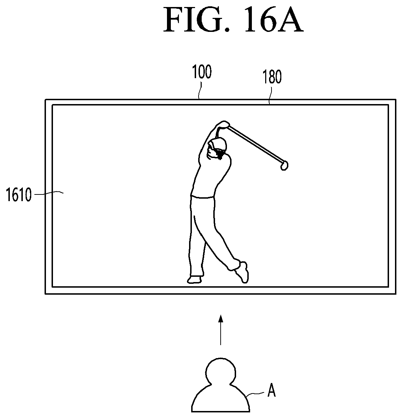

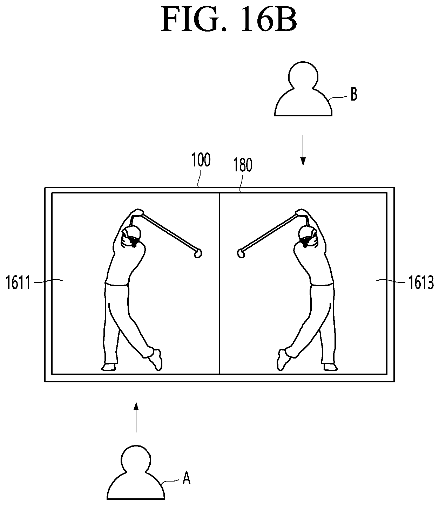

Figs. 16a and 16b are views explaining examples of providing different display directions of images according to execution of a multi-view function when there are viewers respectively in front and behind a transparent display according to an embodiment of the present disclosure.

The multi-view function may be a function that divides the entire screen of the transparent display 180 into a plurality of parts and displays different images on each of the divided screens. Each divided screen may be the execution screen of one application.

Referring to Fig. 16a, a transparent display device 100 displays image content 1610 on a transparent display 180, and a first viewer A positioned in front of the transparent display 18 is viewing the image content 1610.

As illustrated in Fig. 16b, the transparent display device 100 can recognize a second viewer B positioned at the rear of the transparent display 180.

A transparent display device 100 can divide image content 1610 and display a first divided image 1611 and a second divided image 1613 on a transparent display 180.

The first segmented image 1611 may be a reduced version of the image content 1610.

The second segmented image 1613 may be an image obtained by rotating the first segmented image 1611 in the left and right direction.

The first viewer A can view the first split image 1611, and the second viewer B can view the second split image 1613.

In this way, according to the embodiment of the present disclosure, even if viewers are positioned in front and behind the transparent display 180, split images appropriate for their positions can be provided, thereby improving the user experience.

Meanwhile, when image content 1610 and text content (not illustrated) are displayed simultaneously, the text content (not illustrated) may be displayed in the left and right direction and displayed on the second split image 1613.

According to one embodiment of the present disclosure, the above-described method can be implemented as a processor-readable code on a medium in which a program is recorded. Examples of the processor-readable medium include a ROM, a RAM, a CD-ROM, a magnetic tape, a floppy disk, an optical data storage device, and the like.

The display device described above is not limited to the configuration and method of the embodiments described above, and the embodiments may be configured by selectively combining all or part of the embodiments so that various modifications can be made.

## Claims

1. A transparent display device, comprising:
a transparent display displaying image content and first text content; and
a controller recognizing a position of a viewer viewing the image content and, if the viewer is positioned behind the transparent display, displays second text content obtaining by rotating the first text content in a left and right direction on the transparent display.

2. The transparent display device of claim 1,
wherein the controller, if determining that the first viewer is positioned in the front of the transparent display and the second viewer is positioned in the rear of the transparent display device, displays the first text content and the second text content on the transparent display.

3. The transparent display device of claim 2,
wherein the first text content is displayed on the first area of the transparent display, and the second text content is displayed on the second area of the transparent display.

4. The transparent display device of claim 1,
wherein the controller, if the viewer is positioned behind the transparent display, displays the second text content obtaining by rotating the arrangement of the text string included in the first text content in the left and right direction, on the transparent display.

5. The transparent display device of claim 1,
wherein the controller
obtains a first absolute coordinate corresponding to a first button input received from a remote control device,
obtains a second absolute coordinate corresponding to a second button input received from the remote control device,
sets the first and second absolute coordinates as spatial reference coordinates,
obtains a third absolute coordinate corresponding to a third button input received from the remote control device,
compares the spatial reference coordinates and the third absolute coordinates, and
recognizes the position of the viewer based on the comparison result.

6. The transparent display device of claim 1, further comprising:
a front IR sensor transmitting a first IR signal to the front of the transparent display, and
a rear IR sensor transmitting a second IR signal to the rear of the transparent display,
wherein the controller
measures a first reflection distance of a first reflection signal according to the reflection of the first IR signal,
measures a second reflection distance of a second reflection signal according to the reflection of the second IR signal, and
recognizes the position of the viewer according to a comparison of the first and second reflection distances.

7. The transparent display device of claim 1, further comprising:
a speaker outputting a test sound;
a front microphone receiving a first reflected sound for the test sound and arranged in a front surface of the transparent display; and
a rear microphone receiving a second reflected sound for the test sound and arranged in the rear surface of the transparent display,
wherein the controller obtains a first delay time for the first reflected sound, obtains a second delay time for the second reflected sound and recognizes the position of the viewer based on a comparison result between the first and second delay times.

8. The transparent display device of claim 1, further comprising:
a speaker outputting a test sound;
a front microphone receiving a first reflected sound for the test sound and arranged in a front surface of the transparent display; and
a rear microphone receiving a second reflected sound for the test sound and arranged in the rear surface of the transparent display,
wherein the controller obtains a first signal power for the first reflected sound, obtains a second signal power for the second reflected sound and recognizes the position of the viewer based on a comparison result between the first and second signal powers.

9. The transparent display device of claim 1, further comprising:
a microphone array receiving a voice spoken by the viewer,
wherein the controller recognizes a reception direction of the voice based on the voice received by the microphone array, and recognizes the position of the viewer based on the reception direction.

10. The transparent display device of claim 1, further comprising:
a front camera photographing the front of the transparent display to obtain a first image; and
a rear camera photographing the rear of the transparent display to obtain a second image,
wherein the controller determines whether the viewer's face image is extracted from the first and second images and recognizes the viewer's position based on the determination result.

11. A method for operating a transparent display device, comprising:
displaying image content and first text content on a transparent display;
recognizing a position of a viewer viewing the image content; and
if the viewer is positioned behind the transparent display, displaying second text content obtaining by rotating the first text content in the left and right direction.

12. The method for operating a transparent display device of claim 11, further comprising:
If it is determined that a first viewer is positioned in front of the transparent display and a second viewer is positioned in the rear of the transparent display device, displaying the first text content and the second text content.

13. The method for operating a transparent display device of claim 12,
wherein the first text content is displayed on the first area of the transparent display, and the second text content is displayed on the second area of the transparent display.

14. The method for operating a transparent display device of claim 11,
wherein the displaying the second text content includes,
if the viewer is positioned behind the transparent display, displaying the second text content obtaining by rotating the arrangement of the text string included in the first text content in left and right direction, on the transparent display.

15. The method for operating a transparent display device of claim 11,
wherein the first text content is one of an OSD (On Screen Display) image or a subtitle.
